(19) Europäisches Patentamt
European Patent Office
Office européen des brevets

(11) EP 1 423 460 B1

(12) **EUROPÄISCHE PATENTSCHRIFT**

(45) Veröffentlichungstag und Bekanntmachung des Hinweises auf die Patenterteilung:
**27.04.2005 Patentblatt 2005/17**

(21) Anmeldenummer: **02794519.5**

(22) Anmeldetag: **26.07.2002**

(51) Int Cl.⁷: **C08K 5/00**, C08L 67/02

(86) Internationale Anmeldenummer:
**PCT/EP2002/008317**

(87) Internationale Veröffentlichungsnummer:
**WO 2003/014212 (20.02.2003 Gazette 2003/08)**

(54) **HALOGENFREIE FLAMMGESCHÜTZTE POLYESTER**

HALOGEN-FREE FLAMEPROOF POLYESTER

POLYESTER IGNIFUGE DEPOURVU D'HALOGENE

(84) Benannte Vertragsstaaten:
**AT BE BG CH CY CZ DE DK EE ES FI FR GB GR IE IT LI LU MC NL PT SE SK TR**

(30) Priorität: **07.08.2001 DE 10137930**

(43) Veröffentlichungstag der Anmeldung:
**02.06.2004 Patentblatt 2004/23**

(73) Patentinhaber: **BASF Aktiengesellschaft
67056 Ludwigshafen (DE)**

(72) Erfinder:
- **ENGELMANN, Jochen
67434 Neustadt (DE)**
- **WARTIG, Detlev
68723 Schwetzingen (DE)**

(56) Entgegenhaltungen:
**EP-A- 0 919 591**
**DE-A- 19 820 398**
**DE-A- 19 904 814**
**DE-A- 19 933 901**
**US-A- 5 780 534**

EP 1 423 460 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft thermplastische Formmassen enthaltend

A) 20 bis 97 Gew.-% eines thermoplastischen Polyesters

B) 1 bis 40 Gew.-% eines Phosphinsäuresalzes und/oder eines Diphosphinsäuresalzes und/oder deren Polymere, wobei Komponente B) eine mittlere Teilchengröße ($d_{50}$-Wert) kleiner 10 μm aufweist,

C) 1 bis 30 Gew.-% eines stickstoffhaltigen Flammschutzmittels,

D) 0 bis 5 Gew.-% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen

E) 0 bis 60 Gew.-% weiterer Zusatzstoffe,

wobei die Summe der Gewichtsprozente der Komponenten A) bis E) 100 % ergibt.

Weiterhin betrifft die Erfindung die Herstellung und die Verwendung der erfindungsgemäßen Formmassen zur Herstellung von Fasern, Folien und Formkörpern jeglicher Art.

Polyesterformmassen, die mit einem P-haltigen Flammschutzmittel in Kombination mit einem Melaminderivat flammgeschützt sind, sind bekannt.

Aus der EP-A 932 643 ist beispielsweise die Kombination von Calciumphosphinaten mit Melamincyanurat als Flammschutzmittel für Polyester bekannt.

Die meisten Phosphinate sind gut wasserlöslich, so daß sich bei Lagerung der Polyester-Formmassen in feuchtem Klima auf dem Formteil ein weißer Belag bildet bzw. sich bei Metallkontakten (Cu, Messing, Zn) deutliche Korrosionsspuren zeigen.

Der vorliegenden Erfindung lag daher die Aufgabe zugrunde, halogenfrei flammgeschützte Polyesterformmassen zur Verfügung zu stellen, die bei verschiedensten Lagerbedingungen (Wärmelagerung, Feuchtlagerung etc.) von Granulat bzw. Formteilen keine Verfärbungen bzw. keine oder nur äußerst geringfügige Migration von Additiven zeigen.

Weiterhin soll die Korrosion an Metalloberflächen, die bei den verschiedenen Klimabedingungen in direktem Kontakt mit der Polymermatrix stehen, weitestgehend minimiert werden.

Darüber hinaus wird ein ausgeglichenes Eigenschaftsprofil hinsichtlich Flammschutz (UL 94 V0 bis 1,6 mm), mechanischer, thermischer und elektrischer Eigenschaften sowie bezüglich der Verarbeitbarkeit angestrebt.

Demgemäß wurden die eingangs definierten Formmassen gefunden. Bevorzugte Ausführungsformen sind den Unteransprüchen zu entnehmen.

Herkömmliches kommerzielles Phosphinat fällt je nach Herstellungsbedingungen beim Fällprozess in Teilchengrößen von $d_{50}$ = 25 - 150 μm an. Zur Lösung der oben beschriebenen Aufgabe wurde das Phosphinat fein gemahlen ($d_{50}$ = 2 - 10 μm). Es wurde überraschenderweise gefunden, daß beim Einsatz des feinteiligen Phosphinats eine deutliche Verringerung der Migration und der Kontaktkorrosion an Metallen zu beobachten ist. Die übrigen Materialeigenschaften werden dabei teilweise leicht verbessert (Mechanik), aber in keinem Fall nachteilig beeinflusst.

Feinteiliges Phosphinat hat jedoch bei der Verarbeitung den Nachteil, daß es zu Verklumpung und zu Verbackungen an Gefäßwänden neigt. Dies bringt einen erheblichen Mehraufwand bei der Handhabung dieses Pulvers mit sich, z.B. beim Dosieren des Pulvers in die Polymerschmelze.

Der vorliegenden Erfindung lag daher weiterhin als Aufgabe zugrunde, ein verbessertes Verfahren zur Herstellung der erfindungsgemäßen Formmassen zu finden, welches u.a. eine einfachere Verarbeitung der einzelnen Komponenten, insbesondere des Phosphinsäuresalzes ermöglicht.

Demgemäß wurden Verfahren zur Herstellung der erfindungsgemäßen Formmassen gefunden, die dadurch gekennzeichnet sind, daß man die zerkleinerte Komponente B) mit C) vorab mischt oder B) und C) vorab mischt sowie gemeinsam zerkleinert und anschließend mit den übrigen Komponenten A sowie gegebenenfalls D und/oder E mischt, in der Schmelze homogenisiert, austrägt sowie abkühlt und granuliert.

Überraschenderweise ergibt sich eine deutlich verbesserte Rieselfähigkeit (keine Verklumpungen) des Gemisches. Bevorzugt ist dabei, die beiden Flammschutzmittel, die im Compound beide mit etwa gleicher Teilchengröße vorliegen sollen, vor dem Mahlen zu mischen. Darüber hinaus liegen die beiden Substanzen dann auch in einer homogenen Mischung vor, was zu einer sehr gleichmäßigen Verteilung der Additive im Compound und damit zu verbesserten Eigenschaften führt.

Als Komponente (A) enthalten die erfindungsgemäßen Formmassen 20 bis 98, bevorzugt 30 bis 97 und insbesondere 30 bis 89 Gew.-% eines thermoplastischen Polyesters.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate insbesondere mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:

1) sog. Post Industrial Rezyklat: hierbei handelt es sich um Produktionsabfälle bei der Polykondensation oder bei der Verarbeitung z.B. Angüsse bei der Spritzgußverarbeitung, Anfahrware bei der Spritzgußverarbeitung oder Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 6 mm, vorzugsweise kleiner 5 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen

Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

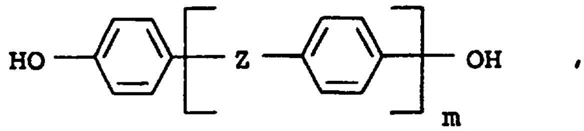

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch $C_1$-$C_6$-Alkyl- oder Alkoxygruppen und Fluor, Chlor oder Brom als Substituenten tragen.

Als Stammkörper dieser Verbindungen seinen beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und

Hydrochinon sowie deren kernalkylierte oder kernhalogenierte Derivate genannt.

Von diesen werden

9,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,

sowie insbesondere

2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan

oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel

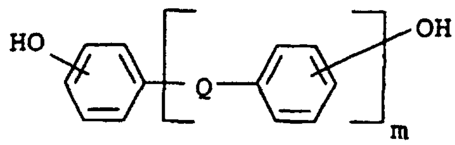

worin Q eine Einfachbindung, eine $C_1$- bis $C_8$-Alkylen-, eine $C_2$- bis $C_3$-Alkyliden-, eine $C_3$- bis $C_6$-Cycloalkylidengruppe, eine $C_6$- bis $C_{12}$-Arylengruppe sowie -O-, -S- oder -$SO_2$- bedeutet und m eine ganze Zahl von 0 bis 2 ist.

Die Diphenole können an den Phenylenresten auch Substituenten haben wie $C_1$- bis $C_6$-Alkyl oder $C_1$- bis $C_6$-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethylbutyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente C) enthalten die erfindungsgemäßen Formmassen 1 bis 40, vorzugsweise 1 bis 30 und insbesondere 5 bis 20 Gew.-% eines Phosphinsäuresalzes und/oder eines Diphosphinsäuresalzes und/oder deren Polymere, wobei die Komponente B) eine mittlere Teilchengröße ($d_{50}$-Wert) kleiner 10 µm, vorzugsweise kleiner 7 µm aufweist. Bevorzugte Komponenten B) sind Phosphinsäuresalze der Formel I und/oder Diphosphinsäuresalze der Formel II und/oder deren Polymere

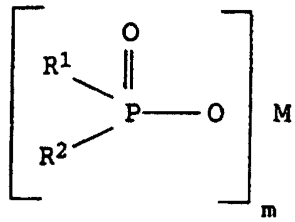

I

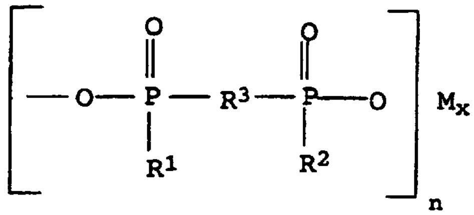

II

wobei die Substituenten folgende Bedeutung haben:

$R^1$, $R^2$ Wasserstoff, $C_1$- bis $C_6$-Alkyl, der gegebenenfalls eine Hydroxylgruppe enthält, vorzugsweise $C_1$- bis $C_4$-Alkyl, linear oder verzweigt, z.B. Methyl, Ethyl, n-Propyl, iso-Propyl, n-Butyl, tert.-Butyl, n-Pentyl; Phenyl; wobei bevorzugt mindestens ein Rest $R^1$ oder $R^2$, insbesondere $R^1$ und $R^2$ Wasserstoff ist;

$R^3$ $C_1$- bis $C_{10}$-Alkylen, linear oder verzweigt, z.B. Methylen, Ethylen, n-Propylen, iso-Propylen, n-Butylen, tert.-Butylen, n-Pentylen, n-Octylen, n-Dodecylen;
Arylen, z.B. Phenylen, Naphthylen; Alkylarylen, z.B. Methyl-phenylen, Ethyl-phenylen, tert.-Butyl-phenylen, Methyl-naphthylen, Ethyl-naphthylen, tert.-Butyl-naphthylen;
Arylalkylen, z.B. Phenyl-methylen, Phenyl-ethylen, Phenyl-propylen, Phenyl-butylen;

M ein Erdalkali-, Alkalimetall, Al, Zn, Fe, Bor;

m eine ganze Zahl von 1 bis 3;

n eine ganze Zahl von 1 und 3 und

x 1 oder 2.

Besonders bevorzugt sind Verbindungen der Formel I, in denen $R^1$ und $R^2$ Wasserstoff ist, wobei M vorzugsweise Ca, Zn oder Al ist und Calciumphosphinat als Verbindung ganz besonders bevorzugt ist.

Derartige Produkte sind im Handel z.B. als Calciumphosphinat erhältlich.

Geeignete Salze der Formel I oder II, in denen nur ein Rest $R^1$ oder $R^2$ Wasserstoff bedeutet, sind z.B. Salze der Phenylphosphinsäure, wobei deren Na- und/oder Ca-Salze bevorzugt sind.

Weiterhin bevorzugte Salze weisen einen hydroxylgruppenhaltigen Alkylrest $R^1$ und/oder $R^2$ auf. Diese sind beispielsweise durch Hydroxymethylierung erhältlich. Bevorzugte Verbindungen sind Ca, Zn und Al-Salze.

Die mittlere Teilchengröße ($d_{50}$-Wert) der Komponente B) ist kleiner 10 µm, vorzugsweise kleiner 7 µm und insbesondere kleiner 5 µm.

Unter einem $d_{50}$-Wert versteht der Fachmann in der Regel den Teilchengrößenwert, bei welchem 50 % der Teilchen eine kleinere Teilchengröße aufweisen und 50 % eine größere Teilchengröße aufweisen.

Der $d_{10}$-Wert ist vorzugsweise kleiner 4 µm, insbesondere 3 µm und ganz besonders bevorzugt kleiner 2 µm.

Bevorzugte $d_{90}$-Werte sind kleiner 40 µm und insbesondere kleiner 30 µm und ganz besonders bevorzugt kleiner 20 µm.

Die Teilchengrößen werden im allgemeinen mittels Laserbeugung bestimmt, bei Injektordrücken größer 2 bar, vorzugsweise größer 2,5 bar und einer Gasgeschwindigkeit größer 100 m/s, vorzugsweise größer 140 m/s.

Als Komponente C) enthalten die erfindungsgemäßen thermoplastischen Formmassen 1 bis 30, bevorzugt 1 bis 20, und insbesondere 5 bis 15 Gew.-% eines stickstoffhaltigen Flammschutzmittels enthalten.

Das gemäß der Erfindung (Komponente C) insbesondere bevorzugt geeignete Melamincyanurat ist ein Reaktionsprodukt aus vorzugsweise äquimolaren Mengen von Melamin (Formel III) und Cyanursäure bzw. Isocyanursäure (Formeln IIIa und IIIb)

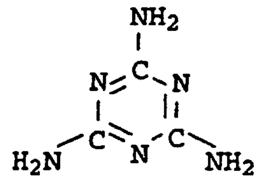

(III)

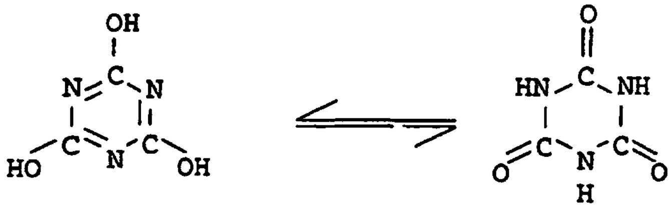

(IIIa) Enolform

(IIIb) Ketoform

Man erhält es z.B. durch Umsetzung von wäßrigen Lösungen der Ausgangsverbindungen bei 90 bis 100°C. Das im Handel erhältliche Produkt ist ein weißes Pulver mit einer mittleren Korngröße $d_{50}$ von 1,5 - 7 µm.

Insbesondere bevorzugt sind Melaminverbindungen jeglicher Art. Geeignete Verbindungen (oft auch als Salze oder Addukte bezeichnet) sind Melaminborat, -oxalat, -phosphat prim., -phosphat sec. und -pyrophosphat sec., Neopentylglycolborsäuremelamin sowie polymeres Melaminphosphat (CAS-Nr 56386-64-2).

Geeignete Guanidinsalze sind

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| Harnstoffphosphat grün | 4861-19-2 |
| Harnstoffcyanurat | 57517-11-0 |
| Ammelin | 645-92-1 |
| Ammelid | 645-93-2 |
| Melam | 3576-88-3 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat $(NH_4PO_3)_n$ mit n ca. 200 bis 1000 bevorzugt 600 bis 800, und Tris(hydroxyethyl)isocyanurat (THEIC) der Formel IV

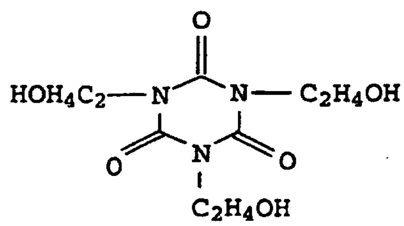

IV

oder dessen Umsetzungsprodukte mit aromatischen Carbonsäuren $Ar(COOH)_m$, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der EP-A 584 567.

Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/ oder dessen Umsetzungsprodukte mit phosphorhaltigen Stickstoffverbindungen, insbesondere $(NH_4PO_3)_n$ oder Melaminpyrophosphat oder polymeres Melaminphosphat eingesetzt. Das Mischungsverhältnis z.B. von $(NH_4PO_3)_n$ zu THEIC beträgt vorzugsweise 90 bis 50 zu 10 bis 50, insbesondere 80 bis 50 zu 50 bis 20 Gew.-%, bezogen auf die Mischung derartiger Komponenten B).

Weiterhin geeignet sind Benzoguanamin-Verbindungen der Formel V

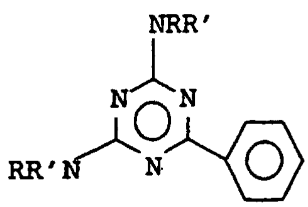

V,

in der R,R' geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel VI

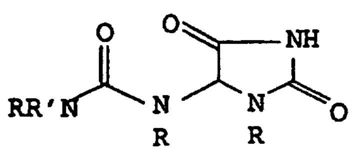

VI

wobei R,R' die in Formel V angegebene Bedeutung haben sowie deren Salze mit Phosphorsäure, Borsäure und/oder Pyrophosphorsäure sowie Glycolurile der Formel VII oder dessen Salze mit den obengenannten Säuren

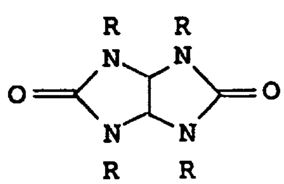

VII

in der R die in Formel V genannte Bedeutung hat.

Geeignete Produkte sind im Handel oder gemäß DE-A 196 14 424 erhältlich.

Das gemäß der Erfindung verwendbare Cyanguanidin (Formel VIII) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

$$CaNCN + H_2O\ CO_2 \rightarrow H_2N\text{-}CN + CaCO_3$$

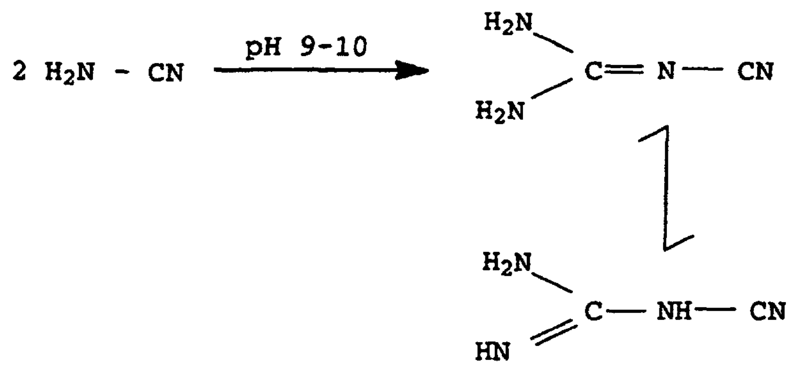


VIII

Das im Handel erhältliche Produkt ist ein weißes Pulver mit einem Schmelzpunkt von 209°C bis 211°C.

Als Komponente D) können die erfindungsgemäßen Formmassen 0 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig-sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0 bis 60, insbesondere bis zu 50 Gew.-% weiterer Zusatzstoffe und Verarbeitungshilfsmittel enthalten, welche verschieden von B), C) und D) sind.

Übliche Zusatzstoffe E) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$$R^1C(COOR^2)=C(COOR^3)R^4 \qquad (I)$$

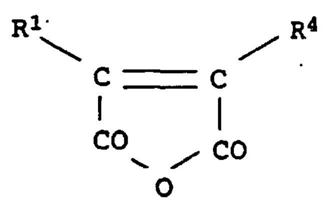

(II)

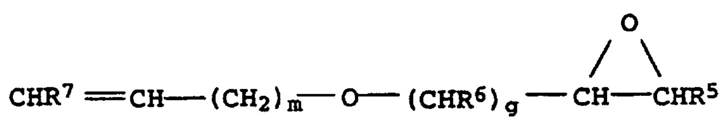

(III)

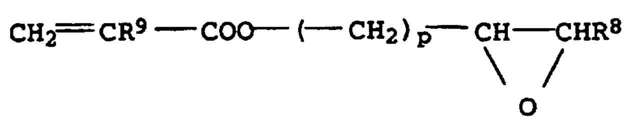

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppenenthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/ oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/ oder Glycidylmethacrylat, (Meth)acrylsäure und/ oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel <

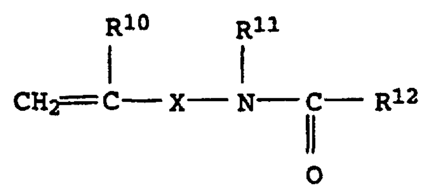

eingeführt werden können,
wobei die Substituenten folgende Bedeutung haben können:

$R^{10}$ Wasserstoff oder eine $C_1$- bis $C_4$-Alkylgruppe,

$R^{11}$ Wasserstoff, eine $C_1$- bis $C_8$-Alkylgruppe oder eine Arylgruppe, insbesondere Phenyl,

$R^{12}$ Wasserstoff, eine $C_1$- bis $C_{10}$-Alkyl-, eine $C_6$- bis $C_{12}$-Arylgruppe oder $-OR^{13}$

$R^{13}$ eine $C_1$- bis $C_8$-Alkyl- oder $C_6$- bis $C_{12}$-Arylgruppe, die gegebenenfalls mit O- oder N-haltigen Gruppen substituiert sein können,

X eine chemische Bindung, eine $C_1$- bis $C_{10}$-Alkylen- oder $C_6$-$C_{12}$-Arylengruppe oder

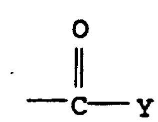

Y O-Z oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| 1 | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe E) seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 % eingesetzt werden.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X-(CH_2)_n)_k-Si-(O-C_mH_{2m+1})_{2-k}$$

in der die Substituenten folgende Bedeutung haben:

X $NH_2$-,

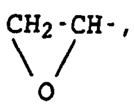

HO-,

n eine ganze Zahl von 2 bis 10, bevorzugt 3 bis 4

m eine ganze Zahl von 1 bis 5, bevorzugt 1 bis 2

k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf E) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Gleit- und Entformungsmittel, welche verschieden von E) sind werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 μm, insbesondere von 0,1 bis 5 μm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise kann man die Komponenten B) und C) vorab mischen, im allgemeinen bei Temperaturen von 20 bis 60°C, vorzugsweise bei Raumtemperatur, und anschließend mit den Komponenten A) sowie gegebenenfalls D und/oder E mischen, in der Schmelze homogenisieren, austragen sowie abkühlen und granulieren.

Hierbei kann ebenso Komponente C) gegebenenfalls vor dem Mischen separat zerkleinert werden. Die Teilchengrößen entsprechen vorzugsweise den $d_{50}$-Werten, gegebenenfalls auch den $d_{10}$ und/oder $d_{90}$-Werten der Komponente B).

In einer weiteren besonderen Ausführungsform mischt man die Komponenten B) und C) vorab und zerkleinert diese gemeinsam und mischt diese anschließend wie vorstehend beschrieben mit den übrigen Komponenten.

Nach einer weiteren bevorzugten Arbeitsweise können die Komponenten B) bis C) sowie gegebenenfalls D) und übliche Zusatzstoffe E) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine geringere Migrationsneigung und gute Flammschutzeigenschaften aus.

Die Metallkorrosion ist zusätzlich minimiert und die mechanischen Eigenschaften bleiben erhalten.

Insbesondere ist die Verarbeitung der einzelnen Komponenten (ohne Verklumpung oder Verbackung) vereinfacht.

Diese eignen sich zur Herstellung von Fasern, Folien und Formkörpern, insbesondere für Anwendungen im Elektro- und Elektronikbereich. Diese Anwendungen sind insbesondere Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Beispiele

Komponente A: Polybutylenterephthalat mit einer Viskositätszahl von 130 ml/g und einem Carboxylendgruppengehalt von 34 mval/kg (Ultradur® B 4520 der BASF AG) (VZ gemessen in 0,5 gew.-%iger Lösung aus Phenol/o-Dichlorbenzol), 1:1-Mischung bei 25°C, enthaltend 0,7 Gew.-% Pentaerythrittetrastearat (Komponente D), bezogen auf 100 Gew.-% A).

Komponente B: Ca ( $H_2$ $PO_2$ $)_2$

Komponente C: Melamincyanurat

Komponente E: Schnittglasfasern mit einer mittleren Dicke von 10 µm

Herstellung der Formmassen

Das Ca-Phosphinat wurde vermahlen und die Teilchengröße durch Laserbeugung mit einem Malvern 2600 (Injektordruck 3,5 bar; Gasgeschwindigkeit 172 m/s) ermittelt. Die Mischung mit Melamincyanurat für Beispiel 6 erfolgte nach dem Mahlen in einem Mischer. Für Beispiel 7 wurde das Melamincyanurat C) und das Ca-Phosphinat B) ungemahlen ($d_{50}$ > 100 µm) gemischt und danach gemeinsam auf eine Teilchengröße $d_{50}$ = 4 µm gemahlen.

Die Komponenten A) bis E) wurden ausschließlich auf einem Zweischneckenextruder bei 250 bis 260°C abgemischt und in ein Wasserbad extrudiert. Nach Granulierung und Trocknung wurden auf einer Spritzgußmaschine Prüfkörper gespritzt und geprüft.

Die Brandtests wurden nach der üblichen Konditionierung gemäß UL-94-Vorschrift, die Mechanik-Prüfungen gemäß ISO 527-2 bzw. ISO 179/leU durchgeführt. Die CTI Messungen erfolgten nach IEC 112 mit der Testlösung A.

Die Migration wurde über 20 Tage durch Lagerung bei 100 % rel. Luftfeuchte (12 h bei 23°C), 12 h bei 40°C) bestimmt. Es wurden 64 g Spritzgußformteile (Brandstäbe 3,2 mm Dicke) eingewogen. Über an der Formteiloberfläche kondensierte Feuchtigkeit wird das austretende Phosphinat in 50 ml Wasser ausgewaschen. Die P-Konzentration im Wasser wird mittels Atomemmissionsspektroskopie analyisiert. Die Kontaktkorrosion wurde unter identischen Lagerbedingungen untersucht, wobei die Metallplättchen aus Cu, Zn und Messing (40*40*1 $mm^3$) jeweils zur Hälfte in Granulat eintauchten und die andere Hälfte somit dem Gasraum über dem Granulat ausgesetzt war.

Die Zusammensetzung der Formmassen entsprach 50 Gew.-% Polybutylenterephthalat, 15 Gew.-% Ca-Phosphinat mit der jeweilig angegebenen Teilchengröße, 10 Gew.-% Melamincyanurat ($d_{50}$ = 3 µm) und 25 Gew.-% Schnittglasfaser mit einer mittleren Dicke von 10 µm.

Die erfindungsgemäßen Verfahrensweisen und die Ergebnisse der Messungen sind der Tabelle zu entnehmen.

Tabelle

| | | | Beispiele | | | | | | |
|---|---|---|---|---|---|---|---|---|---|
| | Prüfvorschrift | Einheit | 1 | 2 | 3 | 4 | 5* | 6 | 7 |
| Zugabe MC/Calciumphosphinat | | | getrennt | getrennt | getrennt | getrennt | getrennt | Mischung nach Mahlen | Mischung vor Mahlen |
| Teilchengrößen des Calciumphosphinats B) | | | | | | | | | |
| $d_{10}$ | | µm | 2 | 2 | 2 | 3 | 6 | 2,5 | 1 |
| $d_{50}$ | | µm | 2,1 | 4 | 6 | 9 | 25 | 4 | 4 |
| $d_{90}$ | | µm | 2,3 | 8 | 12 | 27 | 100 | 9 | 7 |
| Zug-E-Modul | ISO 527-2 | MPa | 11400 | 11300 | 11500 | 11600 | 11800 | 11600 | 11600 |
| Streckspannung, Bruchspannung | ISO 527-2 | MPa | 109 | 111 | 109 | 110 | 106 | 110 | 113 |
| Charpy-Schlagzähigkeit 23°C | ISO 179/1eU | kJ/m² | 41 | 44 | 40 | 41 | 39 | 43 | 45 |
| Prüfung nach UL-94-Standard bei d = 1,6 mm | UL 94 | Klasse | V0 | V0 | V0 | V0 | V0 | V0 | V0 |
| Kriechwegbildung CTI, Probelösung A | IEC 112 | V | 600 | 600 | 600 | 600 | 600 | 600 | 600 |

| | | | Beispiele | | | | | | |
|---|---|---|---|---|---|---|---|---|---|
| | Prüfvorschrift | Einheit | 1 | 2 | 3 | 4 | 5* | 6 | 7 |
| Migration | | mg/l | 15 | 15 | 41 | 47 | 110 | 17 | 13 |
| Kontaktkorrosion an Cu, Zn und Messing | | | ++ | ++ | + | 0 | - | ++ | ++ |

++ sehr geringe Kontaktkorrosion
+ geringe Kontaktkorrosion
0 mäßige Kontaktkorrosion
- deutliche Kontaktkorrosion
-- sehr starke Kontaktkorrosion

**Patentansprüche**

1. Thermplastische Formmassen enthaltend

   A) 20 bis 97 Gew.-% eines thermoplastischen Polyesters

   B) 1 bis 40 Gew.-% eines Phosphinsäuresalzes und/oder eines Diphosphinsäuresalzes und/oder deren Polymere, wobei Komponente B) eine mittlere Teilchengröße ($d_{50}$-Wert) kleiner 10 μm aufweist,

   C) 1 bis 30 Gew.-% eines stickstoffhaltigen Flammschutzmittels,

   D) 0 bis 5 Gew.-% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen

   E) 0 bis 60 Gew.-% weiterer Zusatzstoffe,

   wobei die Summe der Gewichtsprozente der Komponenten A) bis E) 100 % ergibt.

2. Thermoplastische Formmassen nach Anspruch 1, enthaltend eines Phosphinsäuresalzes der Formel I und/oder eines Diphosphinsäuresalzes der Formel II und/oder deren Polymere

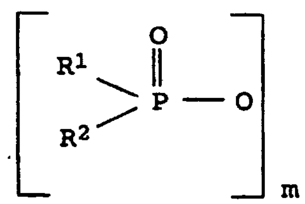

(I)

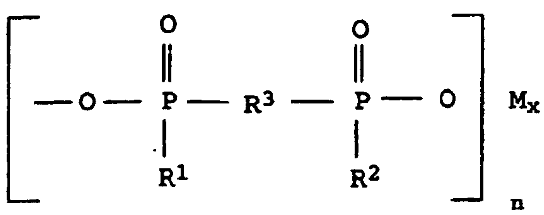

(II)

   wobei die Substituenten folgende Bedeutung haben:

   | | |
   |---|---|
   | $R^1$, $R^2$ | ein linearer oder verzweigter $C_1$- bis $C_6$-Alkylrest, der gegebenenfalls eine Hydroxylgruppe enthält, Phenylrest, Wasserstoff, |
   | $R^3$ | ein linearer oder verzweigter $C_1$- bis $C_{10}$-Alkylenrest, Arylen-, Alkylarylen- oder Arylalkylenrest, |
   | M | Erdalkali-, Alkalimetall, Zn, Al, Fe, Bor, |
   | m | eine ganze Zahl von 1 bis 3, |
   | n | eine ganze Zahl von 1 und 3, |
   | x | 1 oder 2. |

3. Thermoplastische Formmassen nach den Ansprüchen 1 oder 2, in denen die Komponente B) eine mittlere Teilchengröße $d_{50}$ von kleiner 7 μm aufweist.

4. Thermoplastische Formmassen nach den Ansprüchen 1 bis 3, in denen die Komponente B) einen $d_{10}$-Wert kleiner

4 µm aufweist.

5. Thermoplastische Formmassen nach den Ansprüchen 1 bis 4, in denen die Komponente B) einen $d_{90}$-Wert kleiner 40 µm aufweist.

6. Thermoplastische Formmassen nach den Ansprüchen 1 bis 5, in denen die Komponente C) aus Melaminverbindungen aufgebaut ist.

7. Thermoplastische Formmassen nach den Ansprüchen 2 oder 3, in denen $R^1$ und $R^2$ Wasserstoff bedeutet und M für Calcium oder Aluminium in den allgemeinen Formeln I und II steht.

8. Verfahren zur Herstellung der thermoplastischen Formmassen gemäß den Ansprüchen 1 bis 7, **dadurch gekennzeichnet, daß** man die Komponenten B) und C) vorab mischt und anschließend mit den Komponenten A) sowie gegebenenfalls D) und/oder E) mischt, in der Schmelze homogenisiert, austrägt sowie abkühlt und granuliert.

9. Verfahren zur Herstellung der thermoplastischen Formmassen gemäß Anspruch 8, **dadurch gekennzeichnet, daß** man die Komponete B) und C) vorab mischt und gemeinsam zerkleinert sowie anschließend mit den anderen Komponenten mischt.

10. Verwendung der thermoplastischen Formmassen gemäß den Ansprüchen 1 bis 7 zur Herstellung von Fasern, Folien und Formkörpern.

11. Formkörper, erhältlich aus den thermoplastischen Formmassen gemäß den Ansprüchen 1 bis 7 oder gemäß den Verfahrensbedingungen der Ansprüche 8 und/oder 9.

**Claims**

1. A thermoplastic molding composition comprising

   A) from 20 to 97% by weight of a thermoplastic polyester,

   B) from 1 to 40% by weight of a phosphinic salt and/or of a diphosphinic salt and/or polymers of these, where the median particle size ($d_{50}$) of component B) is less than 10 µm,

   C) from 1 to 30% by weight of a nitrogen-containing flame retardant,

   D) from 0 to 5% by weight of at least one ester or amide of aliphatic saturated or unsaturated carboxylic acids having from 10 to 40 carbon atoms with saturated aliphatic alcohols or amines having from 2 to 40 carbon atoms, and

   E) from 0 to 60% by weight of other additives,

   where the total of the percentages by weight of components A) to E) is 100%.

2. A thermoplastic molding composition as claimed in claim 1, comprising a phosphinic salt of formula I and/or a diphosphinic salt of formula II and/or polymers thereof

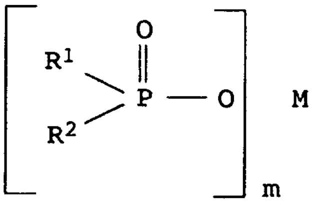

(I)

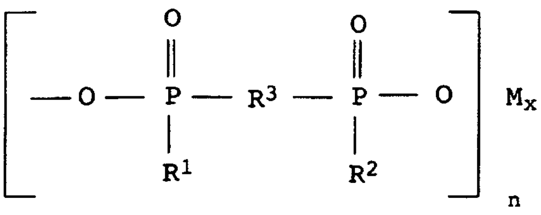

(II)

where the substituents have the following meanings:

- $R^1$, $R^2$ are linear or branched $C_1$-$C_6$-alkyl, where appropriate containing a hydroxyl group, or are phenyl or hydrogen,
- $R^3$ is linear or branched $C_1$-$C_{10}$-alkylene or is arylene, alkylarylene or arylalkylene,
- M is an alkaline-earth metal or alkali metal, Zn, Al, Fe or boron,
- m is an integer from 1 to 3,
- n is an integer from 1 to 3, and,
- x is 1 or 2.

**3.** A thermoplastic molding composition as claimed in claim 1 or 2, in which the median particle size $d_{50}$ of component B) is less than 7 μm.

**4.** A thermoplastic molding composition as claimed in any of claims 1 to 3, in which the $d_{10}$ of component B) is less than 4 μm.

**5.** A thermoplastic molding composition as claimed in any of claims 1 to 4, in which the $d_{90}$ of component B) is less than 40 μm.

**6.** A thermoplastic molding composition as claimed in any of claims 1 to 5, in which component C) is composed of melamine compounds.

**7.** A thermoplastic molding composition as claimed in either of claims 2 and 3, in which $R^1$ and $R^2$ are hydrogen and M is calcium or aluminum in the formulae I and II.

**8.** A process for preparing the thermoplastic molding compositions as claimed in any of claims 1 to 7, which comprises mixing components B) and C) in advance, and then with component A) and also, where appropriate, D) and/or E), homogenizing the same in the melt, and then discharging, cooling, and pelletizing the same.

**9.** The process for preparing the thermoplastic molding compositions as claimed in claim 8, which comprises mixing components B) and C) in advance and comminuting the same together, and then mixing the same with the other components.

**10.** The use of the thermoplastic molding compositions as claimed in any of claims 1 to 7 for producing fibers, films, or moldings.

**11.** A molding obtainable from the thermoplastic molding compositions as claimed in any of claims 1 to 7, or in accordance with the process conditions of claims 8 and/or 9.

## Revendications

**1.** Masses de moulage thermoplastiques contenant

a) 20 à 97 % en poids d'un polyester thermoplastique,

b) 1 à 40 % en poids d'un sel d'acide phosphinique et/ou d'un sel d'acide diphosphinique et/ou de leurs polymères, le composant B) présentant une taille moyenne de particule (valeur $d_{50}$) inférieure à 10 µm,

c) 1 à 30 % en poids d'un agent ignifuge contenant de l'azote,

d) 0 à 5 % en poids d'au moins un ester ou amide d'acides carboxyliques aliphatiques saturés ou insaturés comportant 10 à 40 atomes de C avec des alcools ou amines aliphatiques saturés comportant 2 à 40 atomes de C,

e) 0 à 60 % en poids d'autres additifs, la somme des pourcentages pondéraux des composants A) à E) donnant 100 %.

**2.** Masses de moulage thermoplastiques suivant la revendication 1, contenant un sel d'acide phosphinique de la formule I et/ou un sel d'acide diphosphinique de la formule II et/ou leurs polymères

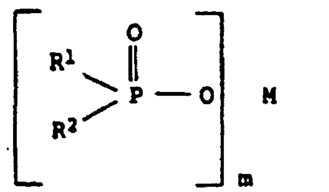

(I)

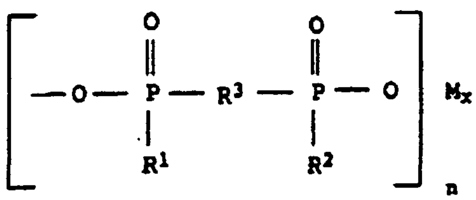

(II)

dans lesquels les substituants ont la signification suivante :

$R^1$, $R^2$ représentent un radical alkyle en $C_1$-$C_6$ linéaire ou ramifié, qui contient éventuellement un groupe hydroxyle, un radical phényle, de l'hydrogène,

$R^3$ représente un radical alkylène en $C_1$-$C_{10}$ linéaire ou ramifié, un radical arylène, alkylarylène ou arylalkylène,

M représente du métal alcalino-terreux, du métal alcalin, Zn, Al, Fe, du bore,

m représente un nombre entier de 1 à 3,

n représente un nombre entier de 1 à 3,

x représente 1 ou 2.

**3.** Masses de moulage thermoplastiques suivant l'une des revendications 1 et 2, dans lesquelles le composant B) présente une taille moyenne de particule $d_{50}$ inférieure à 7 µm.

**4.** Masses de moulage thermoplastiques suivant les revendications 1 à 3, dans lesquelles le composant B) présente une valeur de $d_{10}$ inférieure à 4 µm.

**5.** Masses de moulage thermoplastiques suivant les revendications 1 à 4, dans lesquelles le composant B) présente une valeur de $d_{90}$ inférieure à 40 µm.

**6.** Masses de moulage thermoplastiques suivant les revendications 1 à 5, dans lesquelles le composant C) est construit à partir de composés de mélamine.

**7.** Masses de moulage thermoplastiques suivant l'une des revendications 2 et 3, dans lesquelles $R^1$ et $R^2$ représentent de l'hydrogène et M représente du calcium ou de l'aluminium dans les formules générales I et II.

**8.** Procédé de préparation des masses de moulage thermoplastiques suivant les revendications 1 à 7, **caractérisé**

**en ce qu'**on mélange préalablement les composants B) et C) et ensuite on les mélange avec les composants A) ainsi qu'éventuellement D) et/ou E), on homogénéise dans la masse fondue, on décharge ainsi qu'on refroidit et granule.

**9.** Procédé de préparation des masses de moulage thermoplastiques suivant la revendication 8, **caractérisé en ce qu'**on mélange préalablement les composants B) et C) et on les broye conjointement et **en ce qu'**ensuite on les mélange avec les autres composants.

**10.** Utilisation des masses de moulage thermoplastiques suivant les revendications 1 à 7, pour la fabrication de fibres, de feuilles et de corps façonnés.

**11.** Corps façonnés, que l'on peut obtenir à partir des masses de moulage thermoplastiques suivant les revendications 1 à 7 ou conformément aux conditions de procédé des revendications 8 et/ou 9.